## Europäisches Patentamt
## European Patent Office
## Office européen des brevets

(19)

(11) Numéro de publication: **0 080 993**
**A1**

(12) # DEMANDE DE BREVET EUROPEEN

(21) Numéro de dépôt: 82870019.5

(22) Date de dépôt: 15.04.82

(51) Int. Cl.³: **C 13 D 1/00**
**C 13 L 3/00**

(30) Priorité: 26.11.81 YU 25720/81

(43) Date de publication de la demande:
08.06.83 Bulletin 83/23

(84) Etats contractants désignés:
AT BE CH DE FR GB IT LI LU NL SE

(71) Demandeur: ABAY S.A., Société belge dite:
Rue de Genève 4 btes 26/28
B-1140 Bruxelles(BE)

(71) Demandeur: Fabrika Secera Donji Srem Pecinci
Fabrique de sucre Donji Srem

Pecinci(YU)

(72) Inventeur: Bozidar, Djurdjevic
Karla Dernajza 9
YU-22000 Sremska Mitrovica(YU)

(74) Mandataire: Kellens, Georges E.
c/o BUGNION S.A. rue de Namur 43 -Bte 3
B-1000 Bruxelles(BE)

(54) Procédé d'extraction des glucides solubles à partir des plantes ou de leurs fruits, plus particulièrement du sucre des betteraves sucrières et/ou des cannes à sucre, ainsi que de l'inuline des topinambours.

(57) Le procédé se caractérise en ce qu'après avoir fragmenté les plantes ou leurs fruits et avant de les soumettre à une opération de diffusion, on répartit à température ambiante sur ceux-ci par pulvérisation, des agents chimiques notamment des bisulfites et/ou des dihydrogénophosphates.

Plus particulièrement pour l'extraction du sucre des betteraves sucrières fragmentées en fines lamelles, appelées cossettes et avant de soumettre celles-ci à une opération de diffusion, on répartit, à température ambiante, sur celles-ci par pulvérisation, des agents chimiques et l'on procède ensuite à l'extraction du jus de diffusion, celui-ci étant soumis à une opération d'épuration calco-carbonique ou encore traité directement après réchauffage et filtration en présence d'adjuvant de filtration, sur des résines échangeuses d'ions et/ou sur des membranes semi-perméables.

EP 0 080 993 A1

Croydon Printing Company Ltd.

- 1 -

Procédé d'extraction des glucides solubles à partir des plantes ou de leurs fruits, plus particulièrement du sucre des betteraves sucrières et/ou des cannes à sucre, ainsi que de l'inuline des topinambours

La présente invention est relative à un procédé d'extraction des glucides solubles à partir des plantes ou de leurs fruits, plus particulièrement du sucre des betteraves sucrières et/ou des cannes à sucre, ainsi que de l'inuline des topinambours; toutefois, pour la facilité, il ne sera question dans la suite de la description que de l'extraction du sucre des betteraves sucrières.

L'invention, grâce à l'utilisation dans des conditions déterminées d'agents chimiques sur des betteraves découpées en cossettes, va permettre l'obtention d'un jus de diffusion d'une qualité telle qu'il ne va plus nécessiter après réchauffage et filtration qu'un passage sur des résines échangeuses d'ions et/ou sur des membranes semi-perméables. L'action principale de ces agents chimiques est : par absorption dans la matière des cossettes, d'y lier la pectine avec la cellulose, l'hé- micellulose et la lignine en y formant des protopectines inso- lubles dans l'eau.

- 2 -

L'action secondaire de ces agents chimiques est d'agir, comme coagulants des matières colloïdales.

Le jus de diffusion obtenu par ce procédé permet et facilite la production sous n'importe quelle forme du sucre et de ses dérivés.

L'on sait que le sucre contenu dans les betteraves est retenu à l'intérieur des cellules de la plante; ces cellules sont constituées d'une paroi cellulosique perméable qui est entourée d'une paroi imperméable composée de matières protéiques : c'est l' "ectoplasme" qui est lui-même entouré d'une autre paroi en matières protéiques : le "protoplasme" dans lequel se trouve la vacuole contenant le sucre : les cellules sont liées les unes aux autres par de la pectine.

Pour extraire le sucre des betteraves, l'on procède actuellement de la manière suivante :
Les betteraves lavées étant découpées en cossettes, celles-ci, sans aucun autre traitement préalable, sont introduites à l'extrémité d'un appareil appelé diffuseur et cheminent jusqu'à l'autre extrémité de l'appareil où l'on introduit l'eau de diffusion qui progresse en sens opposé à celui des cossettes et s'enrichit du sucre qu'elle extrait aux cossettes. Cette eau de diffusion qui sort de l'appareil est appelée alors "jus de diffusion".

Pour que cette extraction du sucre soit aussi complète que possible dans le diffuseur, il est nécessaire de détruire la membrane imperméable des cellules qui contiennent le sucre. C'est la raison pour laquelle on prévoit une température de travail dans l'appareil de 70°C environ. A cette température, la destruction de la membrane imperméable est immédiate : les membranes ectoplasmique et protoplasmique s'arrachent de la paroi cellulosique et se contractent à l'intérieur de la cellule permettant le passage des matières dissoutes par diffusion à travers la paroi cellulosique. A froid, l'on n'extrairait que le sucre provenant des seules cellules endommagées par le découpage en cossettes.

Mais simultanément à l'extraction du sucre, toute une série d'autres composants des cellules de betteraves sont extraits et se retrouvent dans le jus de diffusion : ce sont les non-sucres (anioniques, cationiques ainsi que colloïdaux provenant du jus cellulaire).

En plus de ces non-sucres provenant des cellules, d'autres non-sucres colloïdaux sont également présents. Ces derniers sont les protéines et pectines formées par la dégradation des protopectines lorsque les cossettes sont réchauffées à la température nécessaire à la destruction de l'imperméabilité des parois cellulaires.

Comme l'extraction des non-sucres est minimale à un pH légèrement inférieur à 6, on règle à cette valeur le pH de l'eau de diffusion par acidification. La présence de ces non-sucres que l'on ne peut éviter dans les procédés connus joue un rôle néfaste sur la suite du processus de fabrication car elle impose une épuration calco-carbonique coûteuse en matériel et en produits de consommation. Dans cette épuration, les non-sucres colloïdaux sont d'abord coagulés et floculés au préchaulage, ensuite les non-sucres organiques sont en partie dégradés pen-

- 4 -

dant le chaulage et absorbés sur des cristaux de carbonate de calcium formés en carbonatation. L'ensemble est alors filtré pour obtenir un jus de carbonatation plus pur et plus clair que le jus de diffusion.

Afin d'obtenir un jus de diffusion sortant de l'appareil d'extraction, c'est-à-dire le diffuseur, de meilleure qualité, c'est-à-dire dont on aurait diminué la teneur en non-sucres, en particulier des non-sucres de caractère colloïdal, on a proposé par exemple dans le brevet polonais no. 74 293 du 17 novembre 1971, d'utiliser des agents chimiques possédant la propriété de coaguler et floculer les non-sucres colloïdaux.

Les agents chimiques plus particulièrement proposés dans ledit brevet polonais sont une solution de sulfite ou de bisulfite alcalin et autres substances ayant une action similaire et agents que l'on introduit dans le diffuseur, soit dans l'eau de diffusion, soit dans les eaux de presse retournant dans le diffuseur, soit directement dans celui-ci ou soit encore sur les cossettes entrant dans le diffuseur.

Selon cedit brevet, les agents sont donc introduits d'une manière quelconque dans le diffuseur et ils se répartissent dans toute la matière par les mouvements et l'agitation qui règnent dans le diffuseur.

De cette façon, ces agents chimiques ne sont mis en contact avec les autres constituants et en particulier les matières susceptibles de générer les non-sucres colloïdaux qu'au même moment ou qu'après que les diverses membranes soient dégradées par la chaleur pour permettre la diffusion, et la tota-

- 5 -

lité de leur action s'effectue à la température de diffusion.

L'amélioration de la qualité du jus de diffusion qui en résulte reste très limitée. Ce dernier ne peut être traité ultérieurement sans avoir subi une épuration calco-carbonique préalable.

Le procédé selon l'invention permet par contre de prévoir une simplification du traitement ultérieur à la diffusion et si l'on prévoit également, selon l'invention, l'utilisation d'agents chimiques, leur mise en œuvre va s'effectuer d'une manière tout à fait différente ce qui va amener une action véritablement efficace de ces agents.

A cet effet, le procédé selon l'invention pour l'extraction du sucre des betteraves sucrières ayant été fragmentées en fines lamelles appelées "cossettes", se caractérise en ce que, avant de soumettre les cossettes à une opération de diffusion, on répartit à température ambiante sur celles-ci par une pulvérisation, des agents chimiques, qu'ensuite l'on procède de manière connue à l'extraction du jus de diffusion, que l'on soumet à une opération d'épuration calco-carbonique ou encore que l'on traite directement le jus de diffusion, après réchauffage et filtration en présence d'adjuvant de filtration, sur des résines échangeuses d'ions et/ou sur des membranes semi-perméables.

Les agents chimiques prévus sont plus particulièrement le bisulfite de calcium et en général tous les bisulfites; le dihydrogénophosphate de calcium et en général tous les dihydrogénophosphates; les sels solubles dont l'ion actif est tri- ou tétravalent; les combinaisons de deux ou plusieurs de ces produits.

Selon la présente invention, on prévoit donc, avant l'étape de diffusion, une étape supplémentaire pendant laquelle on répartit par pulvérisation et de façon la plus homogène possible une solution contenant ces agents chimiques sur l'ensemble des cossettes qui, comme la solution pulvérisée, sont à température ambiante.

Cette étape qui se déroule à température ambiante et qui se situe donc avant l'entrée des cossettes dans l'appareil de diffusion, doit également être prévue de manière que le temps qui va s'écouler entre le moment où les cossettes vont être pulvérisées, c'est-à-dire atteintes par les agents chimiques et le moment où elles vont entrer dans l'appareil de diffusion, soit suffisant que pour permettre aux agents chimiques de s'absorber ou se lier aux diverses parois cellulaires des cossettes. Les agents chimiques peuvent ainsi interférer avec diverses parois cellulaires des cossettes avant que ces dernières ne soient altérées par le choc thermique à leur entrée dans le diffuseur.

Cette façon de procéder permet ainsi aux agents chimiques absorbés ou liés de retenir les non-sucres colloïdaux à l'intérieur des cossettes.

De la même manière que dans le procédé classique de diffusion, on continue à régler le pH des eaux de diffusion et on utilise pour cela de préférence, les mêmes agents chimiques que ceux prévus pour la pulvérisation.

La pureté du jus de diffusion est très sensiblement augmentée. La qualité du jus de diffusion obtenu selon le procédé est telle que la suite du processus normal de travail en sucrerie peut, si l'utilisateur le désire, en être tout à fait modifiée.

En effet, le jus de diffusion obtenu est, après réchauffage et filtration avec l'appoint d'adjuvant de filtration, totalement dépourvu de matières colloïdales et il peut être traité directement sur des résines échangeuses d'ions et/ou sur des membranes semi-perméables.

L'épuration calco-carbonique habituelle peut être évitée grâce au nouveau procédé, ce qui diminue sensiblement les coûts d'investissements, les coûts de produits de consommation, pierres calcaires et coke, les pertes en sucre dans les écumes, les pertes en sucre résultant de l'élimination des sucres réducteurs dans l'épuration habituelle, les consommations d'énergie par élimination des pertes chimiques nombreuses dans l'épuration habituelle.

Toutefois, le jus produit avec le procédé peut sans inconvénient être traité dans une épuration calco-carbonique classique ou éventuellement simplifiée.

Un autre intérêt important est que les pulpes provenant des cossettes traitées par ce procédé atteignent lors de leur pressage un degré de siccité supérieur à celui des pulpes non traitées et la consommation de combustible pour le séchage des pulpes en est sensiblement réduite.

De manière générale, on prévoit que la quantité d'agents chimiques pulvérisés ou finement dispersés sur les cossettes va être de l'ordre de 10 à 800 gr. par tonne de cossettes dans le cas du bisulfite de calcium ou du dihydrogénophosphate de calcium. Ces produits vont être mis en solution a des concentrations de l'ordre de 1 à 20 gr par litre.

L'on prévoit que la mise en contact des agents chimiques avec les cossettes intervienne au moins 5 secondes avant que les cossettes n'entrent dans l'appareil de diffusion, cependant une durée de mise en contact de 30 secondes est souhaitable.

Au cours des essais, toutes autres valeurs restant constantes, on n'a pas constaté d'amélioration des résultats pour une durée de mise en contact supérieure à 30 secondes; par contre, pour une durée de mise en contact inférieure à 5 secondes, on a constaté une sensible dégradation des résultats.

De cette façon, on obtient un jus de diffusion dont la pureté est supérieure à celle obtenue avec le procédé classique pour des betteraves de même qualité.

Lorsqu'on soumet ensuite ce jus de diffusion à une filtration avec appoint modéré d'adjuvant de filtration et qu'on le traite sur des résines échangeuses d'ions anioniques et cationiques, sa teneur en cendres est réduite à une valeur de l'ordre de 0,01 à 0,5 % Brix.

Lorsqu'on soumet à la même épuration calco-carbonique le jus de diffusion obtenu avec le procédé et le jus de diffusion obtenu par le procédé classique, on constate une coloration du jus de 3 à 12 fois inférieure et une teneur en sels de chaux de 1,5 à 5 fois inférieure pour le jus obtenu selon le procédé.

0080993

- 9 -

Dans tout ce texte, on entend par "entrée des cossettes en diffusion" ou "moment où les cossettes entrent en diffusion", le moment où les cossettes sont mises en contact avec le jus (ou l'eau) de diffusion.

Exemples

En procédant selon l'invention et pour des temps de contact avant entrée en diffusion, des quantités d'agents chimiques et des concentrations en solution de ces agents chimiques comprises dans les gammes mentionnées ci-dessus, on a obtenu les résultats suivants comparés à ceux obtenus à partir de betteraves de même qualité traitées selon le procédé classique et connu.

Pureté du jus de diffusion

| essais | procédé connu | procédé nouveau |
|--------|---------------|-----------------|
| 1 | 87,3 | 89,1 |
| 2 | 88,5 | 90,5 |
| 3 | 86,05 | 88,29 |

après épuration calco-carbonique identique, on trouve :

Coloration en solution

| essais | procédé connu | procédé nouveau |
|--------|---------------|-----------------|
| 1 | 1 600 ICUMSA % Bx | 200 ICUMSA % Bx |
| 2 | 1 400 ICUMSA % Bx | 120 ICUMSA % Bx |
| 3 | 2 000 ICUMSA % Bx | 240 ICUMSA % Bx |

Sels de chaux

| essais | procédé connu | procédé nouveau |
|--------|---------------|-----------------|
| 1 | 0,250 gr CaO % Bx | 0,100 gr CaO % Bx |
| 2 | 0,150 gr CaO % Bx | 0,08 gr CaO % Bx |
| 3 | 0,40 gr CaO % Bx | 0,12 gr CaO % Bx |

L'invention n'est pas limitée, comme déjà indiqué dans le préambule, à l'extraction du sucre de la betterave sucrière, mais peut être utilisée dans l'extraction du sucre de la canne à sucre, comme de l'inuline des topinambours et finalement, de manière générale, pour l'extraction des glucides solubles à partir des plantes ou de leurs fruits.

De même, il doit être compris que l'invention couvre un procédé d'extraction, c'est-à-dire que l'on entend l'ensemble des différentes étapes depuis la mise en condition, fragmentation, découpage,... jusqu'à l'obtention d'un jus pur, et ce dès lors que certaines étapes habituelles des procédés d'extraction vont être supprimées ou non, modifiées, réduites ou non, etc... et cela par l'utilisation dans des conditions déterminées d'agents chimiques.

Revendications

1. Procédé d'extraction des glucides solubles à partir des plantes ou de leurs fruits, plus particulièrement du sucre des betteraves sucrières et/ou des cannes à sucre, ainsi que de l'inuline des topinambours, caractérisé en ce qu'après avoir fragmenté les plantes ou leurs fruits et avant de les soumettre à une opération de diffusion, on répartit à température ambiante sur ceux-ci par pulvérisation, des agents chimiques.

2. Procédé d'extraction selon la revendication 1, du sucre des betteraves sucrières qui, ayant été fragmentées en fines lamelles appelées cossettes, est caractérisé en ce qu'avant de soumettre les cossettes à une opération de diffusion, on répartit à température ambiante sur celles-ci par pulvérisation, des agents chimiques, qu'ensuite l'on procède de manière connue à l'extraction du jus par diffusion et que l'on soumet ce jus de diffusion à une opération d'épuration calco-carbonique.

3. Procédé d'extraction selon la revendication 2, caractérisé en ce que l'on traite directement le jus de diffusion après réchauffage et filtration en présence d'adjuvent de filtration sur des résines échangeuses d'ions et/ou sur des membranes semi-perméables.

4. Procédé selon l'une quelconque des revendications 1 à 3, caractérisé en ce que les agents chimiques sont seuls ou en combinaison des bisulfites dont le bisulfite de calcium, des des dihydrogénophosphates dont le dihydrogénophosphate de calcium, des sels solubles dont l'ion actif est tri- ou tétravalent.

5. Procédé selon l'une quelconque des revendications 1 à 4, caractérisé en ce que la quantité d'agents chimiques est de l'ordre de 10 à 800 gr. par tonne de cossettes.

6. Procédé selon la revendication 5, caractérisé en ce que l'on met les agents chimiques en solution d'une concentration de 1 à 20 gr. par litre.

7. Procédé selon l'une quelconque des revendications 1 à 6, caractérisé en ce que la pulvérisation des agents chimiques sur les cossettes précède d'un temps suffisant l'entrée des cossettes dans l'appareil de diffusion que pour permettre aux agents chimiques de s'absorber ou se lier aux parois cellulaires des cossettes.

8. Procédé selon la revendication 7, caractérisé en ce que l'on prévoit au moins 5 secondes avant de faire entrer les cossettes pulvérisées aux agents chimiques dans l'appareil de diffusion.

- 13 -

Revendications

1. Procédé d'extraction des glucides solubles à partir des plantes ou de leurs fruits, plus particulièrement du sucre des betteraves sucrières et/ou des cannes à sucre, ainsi que de l'inuline des topinambours, plantes ou fruits que l'on a fragmentés et notamment les betteraves sucrières en fines lamelles appelées cossettes, et fruits ou plantes fragmentés que l'on va soumettre à une opération de diffusion, caractérisé en ce qu'avant d'entreprendre cette opération de diffusion, on répartit à température ambiante sur ces fruits ou plantes fragmentés par pulvérisation des agents chimiques qui sont seuls ou en combinaison des bisulfites dont le bisulfite de calcium, des dihydrogénophosphates dont le dihydrogénophosphate de calcium, des sels solubles dont l'ion actif est tri- ou tétravalent, et pulvérisation des agents chimiques sur les cossettes qui précède d'un temps suffisant l'entrée des cossettes dans l'appareil de diffusion que pour permettre aux agents chimiques de s'absorber ou se lier aux parois cellulaires des cossettes.

2. Procédé selon la revendication 1, caractérisé en ce que la quantité d'agents chimiques est de l'ordre de 10 à 800 gr. par tonne de cossettes.

3. Procédé selon la revendication 2, caractérisé en ce que l'on met les agents chimiques en solution d'un concentration de 1 à 20 gr. par litre.

4. Procédé selon l'une quelconque des revendications 1 à 3, caractérisé en ce que l'on prévoit au moins 5 secondes avant de faire entrer les cossettes pulvérisées aux agents chimiques dans l'appareil de diffusion.

5. Procédé d'extraction selon l'une quelconque des revendications 1 à 4, du sucre des betteraves sucrières, caractérisé en ce qu'après l'extraction du jus par diffusion, l'on soumet ce jus à une opération d'épuration calco-carbonique, éventuellement simplifiée.

6. Procédé selon l'une quelconque des revendications 1 à 4, caractérisé en ce que l'on traite directement le jus de diffusion après réchauffage et filtration sur des résines échangeuses d'ions et/ou sur des membranes semi-perméables.

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. C. ³) |
|---|---|---|---|
| X | <u>BE - A - 456 655</u> (E. PAQUAY)<br><br>* revendications 1-3,5,6; pages 2, 3 *<br><br>-- | 1-8 | C 13 D 1/00<br>C 13 L 3/00 |
| X | <u>BE - A - 450 867</u> (E. PAQUAY)<br><br>* revendications 1,6,8-10,16 *<br><br>-- | 1-8 | |
| X | <u>DE - A - 2 404 462</u> (PATZENHOFER'S SOHNE)<br><br>* revendications 1,3,4; page 3, alinéa 2 *<br><br>-- | 1-3,7, 8 | |
| X | <u>FR - A - 861 039</u> (A. ROMWALTER et al.)<br><br>* résumé *<br><br>-- | 1-3,7, 8 | **DOMAINES TECHNIQUES RECHERCHES (Int. Cl. ³)**<br><br>C 13 D |
| X | <u>US -A - 3 975 204</u> (J. ZDARSKY et al.)<br><br>* résumé *<br><br>-- | 1-3,7, 8 | |
| | ./. | | |

Le présent rapport de recherche a été établi pour toutes les revendications

| Lieu de la recherche | Date d'achèvement de la recherche | Examinateur |
|---|---|---|
| LA HAYE | 15-07-1982 | VAN MOER |

Office européen
des brevets

**RAPPORT DE RECHERCHE EUROPEENNE**

**0080993**
Numéro de la demande

EP 82 87 0019

- 2 -

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| X | CHEMICAL ABSTRACTS, vol. 91, no. 11, 10 septembre 1979, page 633, référence 89888v COLUMBUS OHIO (US) SU - A - 664 611 (ODESSA STATE UNIVERSITY), 11 juin 1979. * en entier * | 1-3,7, 8 | |
| A | FR - A - 883 422 (E. PAQUAY) & BE - A - 438 966 & BE - A - 440 230 | 1,4 | DOMAINES TECHNIQUES RECHERCHES (Int. Cl.³) |
| A | GB - A - 924 250 (CHEMISCHE WERKE ALBERT) | | |